**Europäisches Patentamt**

(19) **European Patent Office**

**Office européen des brevets**

(11) Numéro de publication: **0 036 825**
**B1**

(12) # FASCICULE DE BREVET EUROPEEN

(45) Date de publication du fascicule du brevet:
**01.02.84**

(51) Int. Cl.³: **B 64 C 27/46**

(21) Numéro de dépôt: **81400464.4**

(22) Date de dépôt: **24.03.81**

(54) **Pale à hautes performances pour rotor d'hélicoptère.**

(30) Priorité: **25.03.80 FR 8006577**

(43) Date de publication de la demande:
**30.09.81 Bulletin 81/39**

(45) Mention de la délivrance du brevet:
**01.02.84 Bulletin 84/5**

(84) Etats contractants désignés:
**DE GB IT**

(56) Documents cités:
**FR - A - 1 369 600**
**FR - A - 2 153 253**
**FR - A - 2 231 565**

(73) Titulaire: **Société Nationale Industrielle Aérospatiale
Société anonyme dite:, 37 Bld de Montmorency,
F-75016 Paris (FR)**

(72) Inventeur: **Mouille, René Louis, Villa "La Pinède" Le
Coton Rouge, F-13100 Aix-en-Provence (FR)**
Inventeur: **Gallot, Jacques René, Villa Asphodèle Route
Côte bleue, F-13960 Sausset-les-Pins (FR)**
Inventeur: **Pouradier, Jean-Marc Emile, Lycée Maurice
Genevoix Chemin de Bolmon, 13700-Marignane (FR)**

(74) Mandataire: **Bonnetat, Christian et al, Cabinet PROPI
Conseils 23 rue de Léningrad, F-75008 Paris (FR)**

BUNDESDRUCKEREI BERLIN

Pale à hautes performances pour rotor d'hélicoptère

La présente invention se rapporte aux voilures tournantes d'aéronef et, plus particulièrement, concerne une pale à hautes performances pour rotor d'hélicoptère.

On sait qu'une pale de rotor d'hélicoptère fonctionne essentiellement selon deux positions au cours de son trajet circulaire.

Il est considéré, en effet, une position avançante où la pale venant de l'arrière de l'appareil décrit vers l'avant un arc de cercle de 180 degrés et une position reculante où la pale continuant son mouvement vient retrouver après une rotation complète de 360 degrés son emplacement initial de départ.

On sait également que les phénomènes aérodynamiques rencontrés au cours du fonctionnement diffèrent selon la position de la pale.

Ainsi, la pale avançante est soumise à son extrémité à des effets de compressibilité de l'air qui provoquent, par exemple, pour une certaine combinaison de la vitesse d'avancement de l'appareil avec la vitesse de rotation du rotor, une augmentation rapide de la traînée, tandis que la pale reculante est, du fait de son calage aérodynamique élevé, sujette au décrochage.

Pour remédier à ces inconvénients et augmenter le domaine d'utilisation des hélicoptères, il est connu, par exemple, de réduire l'épaisseur relative maximale du profil d'extrémité et de choisir pour l'ensemble des pales du rotor, un vrillage et un réglage du pas, tendant à diminuer le calage aérodynamique de la partie active de la pale reculante.

Une autre solution, laquelle peut être combinée avec les solutions précédentes, est de définir une famille de profils particulièrement bien adaptés pour d'une part, permettre l'obtention en bout de pale d'un Mach de divergence de traînée, $Md_x$, le plus grand possible, et d'autre part, assurer pour la pale reculante, une répartition de pression évitant l'apparition prématurée de la perte de portance.

Dans la demande de brevet européen N° 80401134,4 du 3 juillet 1980, on a décrit un profil de pale pour voilure tournante d'aéronef, capable de très hautes performances à la fois en vol stationnaire, en vol à grande vitesse et en évolutions.

La géométrie de ce profil, marquée notamment par la présence d'un rayon de bord d'attaque particulier, d'un point de courbure minimale à l'intrados, et d'une manière générale par une évolution inédite de la courbure autour dudit profil, confère notamment à ce dernier une valeur remarquable pour le Mach de divergence de traînée, ainsi qu'une grande finesse.

De plus, grâce à l'application de lois géométriques simples de transformation, ledit profil permet de définir, selon l'envergure de la pale et notamment dans la zone d'extrémité, d'autres profils susceptibles de répondre aux exigences des divers types de fonctionnement aérodynamique.

Cependant, ces définitions isolées de profils ne peuvent prendre en considération tous les effets aérodynamiques provenant des interactions d'une part, entre les différents profils le long de l'envergure, d'autre part, entre les pales durant leur rotation.

En effet, la conception d'un profil, considéré comme indéformable lors de son étude, diffère notablement de la conception d'une pale déformable, évoluant dans des écoulements tourbillonnaires.

L'objet de la présente invention est donc de définir une pale pour rotor d'hélicoptère capable de très hautes performances en position avançante comme en position reculante.

Cette pale, définie par l'évolution et l'adaptation le long de son envergure des profils aérodynamiques cités précédemment et, plus précisément, par l'évolution du vrillage et de l'épaisseur relative maximale desdits profils, permet notamment d'obtenir de remarquables performances à grande vitesse sous forte charge.

Outre le compromis optimal réalisé pour le fonctionnement relatif des profils le long de la surface active de la pale, la zone d'emplanture située près du rotor permet d'obtenir un effet bénéfique sur la traînée, ainsi que sur les efforts mécaniques agissant au niveau du dispositif d'attache de la pale au moyeu du rotor.

Dans ce but, selon l'invention, une pale à hautes performances pour rotor d'hélicoptère, comprenant un profil d'extrémité disposé perpendiculairement au bord d'attaque de la pale et un profil d'emplanture placé entre ledit profil d'extrémité et les attaches de la pale au moyeu du rotor, ledit profil d'extrémité et ledit profil d'emplature délimitant selon la majeure partie de l'envergure de la pale, une surface aérodynamique engendrée par des profils de corde essentiellement constante et présentant notamment chacun, d'une part, un rayon de courbure maximale Ro au bord d'attaque défini approximativement par l'expression $Ro = 1,7 \ C \cdot e^2_{max}$, dans laquelle C représente la corde et $e_{max}$ l'épaisseur relative maximale du profil condidéré, d'autre part, un point de courbure minimale positionné à l'intrados à une distance du bord d'attaque environ égale à 20% de la longueur de la corde dudit profil considéré, lesdits profils de ladite surface aérodynamique ayant par ailleurs à partir du profil d'extrémité et cers le profil d'emplanture, un vrillage aérodynamique augmentant linéairement et sensiblement jusqu'à la section de pale où est défini ledit profil d'emplanture, ledit crillage étant ensuite inversé, est caractérisée en ce que l'angle de crillage formé par la corde de portance nulle d'un profil de ladite surface aérodynamique et un plan de référence passant par le milieu des attaches de la pale au moaeu du rotor est pour le profil d'extrémité au plus égale à 0,3 degré et en ce que la différence entre l'angle de crillage du profil d'emplanture et l'angle de vrillage du profil d'extrémité est au moins égale à 6° et au plus égale à 8°.

Ainsi, grâce notamment à cette limite supérieure de vrillage entre les deux parties extrême de la plate et l'utilisation conjointe d'un vrillage linéaire croissant entre le profil d'extrémité et le profil d'emplanture, l'invention permet de définir pour une famille de profils, une pale à très haut rendement propulsif et porteur.

Par ailleurs, pour optimiser la portance de la pale sans augmentation excessive de la traînée, il est avantageux que l'épaisseur relative maximale du profil d'emplanture soit au moins égale à 9% et au plus égale à 13% de la longueur de la corde dudit profil d'emplanture, et que ladite épaisseur relative maximale soit conservée constante, vers le profil d'extrémité, sur une distance au moins égale à 52% de la longueur de l'envergure de la pale.

De même, pour optimiser la traînée, notamment vers l'extrémité de la pale, en assurant une portance satisfaisante et une excellente tenue structurale, il est avantageux, d'une part, que l'épaisseur relative maximale du profil d'ectrémité soit au moins égale à 6% et au plus égale à 9% de la longueur de la corde du profil d'extrémité, d'autre part, que sur une distance au plus égale à 30% de la longueur de l'envergure de la pale, l'épaisseur relative maximale des profils de la surface aérodynamique croisse linéairement depuis ledit profil d'extrémité, où l'épaisseur relative maximale est minimale, jusqu'à la section de pale où l'épaisseur relative maximale devient constante et maximale.

Selon une forme préférentielle de réalisation, la pale est caractérisée en ce que l'angle de vrillage formé par la corde de portance nulle d'un profil de ladite surface aérodynamique et un plan de référence passant par le milieu des attaches de la pale au moyen du rotor est pour le profil d'extrémité approximativement égal à 0,2 degré, ledit profil d'extrémité ayant de plus, d'une part, une épaisseur relativement maximale environ égale à 7% de la longueur de sa corde, d'autre part, une différence de vrillage par rapport au profil d'emplanture environ égale à 7°, la distance séparant ledit profil d'extrémité dudit profil d'emplanture étant par ailleurs environ égale à 80% de la longueur de l'envergure de la pale, et en ce que l'épaisseur relative maximale du profil d'emplanture est environ égale à 12% de la longueur de sa corde, ladite épaisseur relative étant considérée constante sur une distance environ égale à 57% de la longueur de la pale pour décroître ensuite linéairement vers le profil d'extrémité.

Ainsi, toute voilure tournante d'aéronef comportant au moins deux pales et caractérisée en ce qu'au moins une partie de chacune desdites pales est définie par des profils aérodynamiques présentant les évolutions d'angle de vrillage et d'épaisseur relative maximale telles que spécifiées précédemment, permet de réaliser dans les principaux domaines de vol, et notamment pour le vol d'avancement rapide, de remarquables performances.

La description qui va suivre, en regard des dessins annexés, fera bien comprendre comment l'invention peut être réalisée.

La figure 1 représente une vue simplifiée en perspective d'une pale selon l'invention.

La figure 2 montre, selon la flèche F de la figure 1, une vue schématique de l'attache de la pale au moyen du rotor.

La figure 3 définit le calage aérodynamique d'un profil de la pale selon l'invention.

La figure 4 montre une vue en plan simplifiée de la pale selon l'invention.

La figure 5 indique, par rapport à un axe de référence OY, l'évolution en envergure de l'angle de vrillage aérodynamique des profils de la pale selon l'invention.

La figure 6 indique, par rapport à un axe de référence OZ, l'évolution en envergure de l'épaisseur relative maximale des profils de la pale selon l'invention.

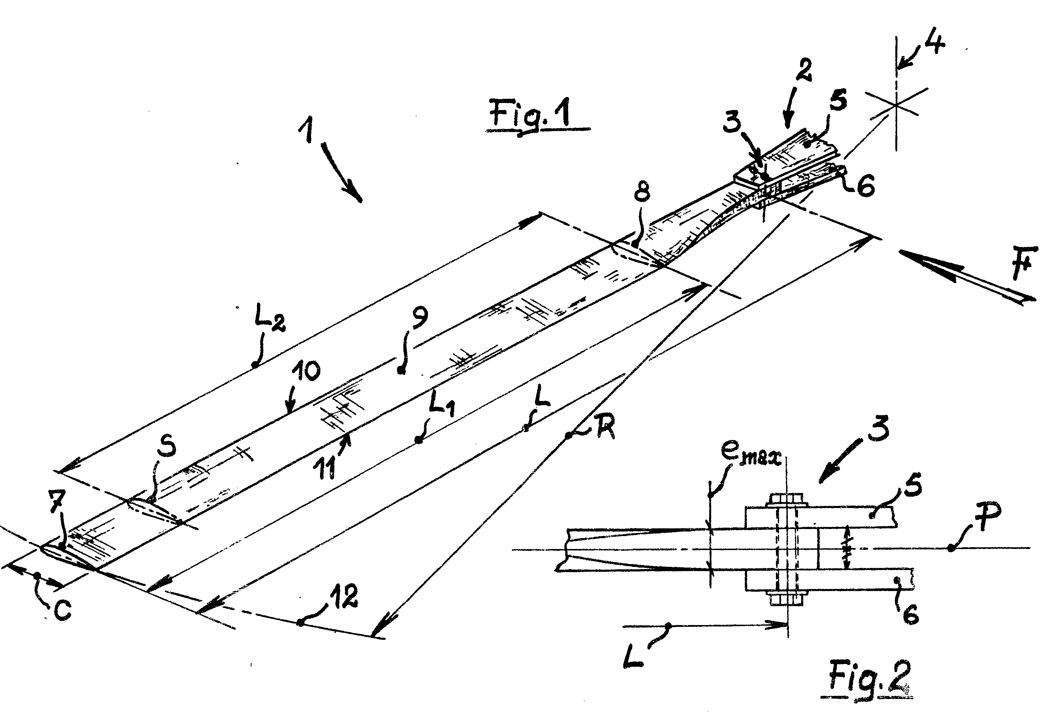

Comme montré par la figure 1, une pale selon l'invention est fixée au moyeu du rotor 2 d'un hélicoptère, par l'intermédiaire d'un dispositif d'attache 3. Dans un but de simplification de l'exposé, le rotor et son moyeu, lesquels ne font pas partie de l'objet de l'invention, sont seulement représentés schématiquement par l'axe du rotor 4 et par des éléments d'attache supérieure 5 et inférieure 6 du moyeu.

La pale, dont la est essentiellement constante selon la majeure partie de la longueur de son envergure L, comporte entre son profil d'extrémité 7 et son profil d'emplanture 8, une surface aérodynamique 9 limitée vers l'avant par une ligne de bord d'attaque 10 et vers l'arrière, par une ligne de bord de fuite 11.

Le profil d'extrémité 7, situé à une distance R de l'axe de rotor 4, c'est-à-dire sur le rayon extérieur R du disque rotor 12, est de préférence placé perpendiculairement au bord d'attaque de la pale 10, tandis que le profil d'emplanture 8, placé entre ledit profil d'extrémité et les attaches de la pale 3 au moyeu du rotor 2, est situé à une distance $L_1$ dudit profil d'extrémité.

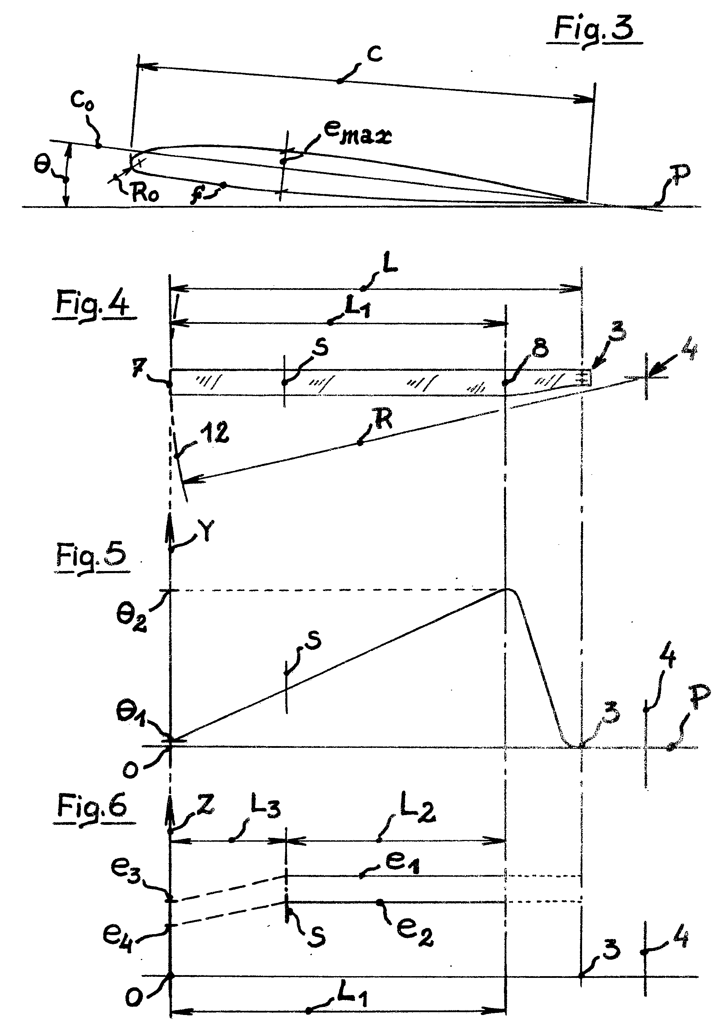

A partir du profil d'extrémité et jusqu'au profil d'emplanture, la surface aérodynamique 9 est engendrée par des profils présentant notamment, comme l'indique la figure 3, un rayon de courbure maximale Ro au bord d'attaque et un point de courbure minimale à l'intrados f, positionné à une distance du bord d'attaque environ égale à 20% de la longueur de la corde C.

Conformément aux définitions mathématiques données dans la demande de brevet européen mentionnée ci-dessus, lesquelles déterminent complètement le contour d'un profil, le rayon Ro est défini approximativement par l'expression $Ro = 1,7 \, C \cdot e^2_{max}$ das laquelle C représente la corde et $e_{max}$ l'épaisseur relative maximale du profil considéré dans l'intervalle d'envergure $L_1$.

Le fonctionnement aérodynamique de la pale dépend notamment du calage en incidence ou vrillage des profils le long de son envergure.

Les figures 2 et 3 montrent comment est défini le calage aérodynamique d'un profil de la surface 9 par rapport à un plan de référence P passant par le milieu des attaches 3 de la pale au moyens du rotor. L'incidence aérodynamique d'un profil peut être en effet définie par un angle $\Theta$ compris entre la corde de portance nulle Co du profil considéré et le plan P de référence cité précédemment.

Pour permettre aux profils de la surface aérodynamique 9 d'engendrer des répartitions de pression stables à tous les régimes de vol en évitant, notamment, dans la zone de bord d'attaque de l'extrémité de la pale l'apparition de pics de survitesse élevés à front raide, l'angle de vrillage aérodynamique augmente linéairement à partir du profil d'extrémité 7 et vers le profil d'emplanture 8.

De plus, dans le but d'optimiser pour lesdits profils cette évolution de l'angle de vrillage, la différence entre l'angle de vrillage $\Theta_2$ du profil d'emplanture et l'angle de vrillage $\Theta_1$ du profil d'extrémité est au moins égale à 6° et au plus égale à 8°, pour une distance $L_1$ séparant ces deux profils, au moins égale à 70% de la longueur L de la pale, comprise comme l'indique, par exemple la figure 4, entre le profil 7 et les attaches 3.

Comme indiqué figure 5, l'angle de vrillage aérodynamique en envergure, laquelle est repérée par rapport à un axe de référence OY placé au niveau du profil d'extrémité et perpendiculaire au plan de référence P, croît linéairement depuis la valeur $\Theta_1$ jusqu'à la valeur $\Theta_2$ du profil d'emplanture, pour ensuite être inversé et devenir nul aux attaches 3 de la pale.

Cette inversion de l'angle de vrillage dans une zone d'emplanture de longueur égale à la différence entre d'une part, la longueur de la pale er d'autre part, la longueur $L_1$ de la surface aérodynamique délimitée par les profiles d'extrémité et d'emplanture, permet notamment, grâce au calage aérodynamique avantageux du profil d'ectrémité 7 par rapport aux attaches 3, lequel est au plus égal à 0,3 degré, l'obtention d'effets bénéfiques sur l'aérodynamisme et les sollicitations mécaniques rencontrés dans cette zone.

Par exemple, l'inversion du vrillage favorise la diminution de la traînée de la pale dans la zone d'emplanture, et principalement lorsque la pale est en position avançante. De plus, lors de l'utilisation dans le moyeu rotor d'une butée sphérique (non représentée) travaillant par déformation de matériaux élastiques et destinée, notamment, à assurer la variation de pas, l'inversion du vrillage permet un fonctionnement quasi-symétrique de la butée autour de sa position de repos, c'est-à-dire au niveau du plan P, ce qui assure une durée de vie accrue pour l'ensemble du rotor.

L'évolution de l'épaisseur relative maximale des profils, le long de l'envergure de la surface aérodynamique, joue également un rôle essentiel sur les caractéristiques aérodynamiques de la pale.

Par exemple, en vol de manoeuvre, la distribution des épaisseurs doit permettre l'obtention d'un coefficient de portance élevé sans pour autant produire, en vol d'avancement rapide, un coefficient de traînée important.

De plus, en vol stationnaire, il est nécessaire d'avoir une grande finesse pour réaliser un haut rendement de sustentation.

Comme montré par les figures 3 et 6, l'évolution de l'épaisseur relative maximale, $e_{max}$, des profils dans l'intervalle $L_1$ séparant le profil d'extrémité du profil d'emplanture, est repérée à l'aide d'un axe de référence OZ placé, à titre d'exemple, au niveau du profil d'extrémité.

La figure 6 montre, plus précisément, que sur une distance $L_2$ l'épaisseur relative maximale est constante du profil d'emplanture vers le profil d'extrémité, en étant au moins égale à une valeur $e_2$ ou au plus égale à une valeur $e_1$.

Pour permettre en effet aux profils situés dans l'intervalle $L_2$ de créer, en combinaison avec le vrillage aérodynamique, des écoulements susceptibles d'engendrer des répartitions de pression déterminant, notamment, une grande portance et une haute finesse, l'épaisseur relative maximale du profil d'emplanture est avantageusement au moins égale à une valeur $e_2$ de 9%, et au plus égale à une valeur $e_1$ de 13% de la longueur de sa corde, ces valeurs étant conservées constantes sur au moins 52% de la longueur de l'envergure L de la pale, c'est-à-dire dans tout l'intervalle $L_2$.

Par ailleurs, dans le but d'augmenter progressivement vers le profil d'extrémité la valeur du Mach de divergence de traînée, ainsi que la finesse des profils, l'épaisseur relative maximale dudit profil d'extrémité est au moins égale à une valeur $e_4$ de 6% et au plus égale à une valeur $e_3$ de 9% de la longueur de sa corde. Comme le montre la figure 6, les valeurs $e_4$ et $e_3$ augmentent linéairement sur une longueur d'envergure, $L_3$, jusqu'à la section de pale S où l'épaisseur relative maximale devient égale à l'une des valeurs $e_2$ ou $e_1$, c'est-à-dire jusqu'au moment où l'épaisseur relative maximale des profils devient constante et maximale.

Avantageusement, la distance $L_3$ est prise au plus égale à 30% de la longueur de l'envergure L, de la pale.

Selon une forme préférentielle de réalisation, l'utilisation conjointe d'une part, de profils présentant notamment un rayon Ro de bord d'attaque et un point de courbure minimale à l'intrados tels que spécifiés précédemment, d'autre part, d'une loi de vrillage et d'une distribution d'épaisseurs relatives maximales particulières pour ces profils, permet d'obtenir une optimisation géométrique de la pale, notamment pour le vol à grande vitesse sous forte charge.

Selon cette forme préférentielle, l'angle de vrillage formé par la corde de portance nulle du profil d'extrémité avec le plan de référence passant par le milieu des attaches de la pale au moyeu du rotor, est approximativement égal à 0,2 degré, ledit profil d'extrémité ayant de plus, d'une part, une épaisseur relative maximale environ égale à 7% de la longueur de sa corde, d'autre part, une différence de vrillage par rapport au profil d'emplanture environ égale à 7°, la distance séparant ledit profil d'extrémité dudit profil d'emplanture étant par ailleurs environ ·égale à 80% de la longueur de l'envergure L, de la pale.

De plus, dans cette réalisation préférentielle, l'épaisseur relative maximale du profil d'emplanture est prise égale à 12% de la longueur de sa corde, ladite épaisseur étant conservée constante sur une distance environ égale à 57% de la longueur L de la pale, pour décroître ensuite linéairement vers le profil d'extrémité.

Des essais comparatifs effectués pour un appareil équipé d'une part, de pales présentant essentiellement les caractéristiques de l'invention, d'autre part, d'un rotor classique utilisant pour ses pales les profils NACA 0012, ont révélé de remarquables résultats.

Par exemple, la comparaison des efficacités sustentatrices montre que la pale, objet de l'invention, permet à puissance égale un accroissement de 5 à 8% de la charge utiler de l'hélicoptère.

De plus, il a été constaté un gain important sur la consommation kilométrique en croisième économique, ainsi qu'une finesse accrue et un excellent niveau vibratoire.

Ces résultats traduisent une excellente adaptation des profils le long de l'envergure de la pale, notamment de l'évolution du vrillage et des épaisseurs relatives maximales desdits profils, permettant à l'invention de trouver des applications dans tous les types de voilure tournante d'aéronef, par exemple, d'hélicoptères.

**Revendications**

1. Pale à hautes performances pour rotor d'hélicoptère, comprenant un profil d'extrémité (7) disposé perpendiculairement au bord d'attaque de la pale et un profil d'emplanture (8) placé entre ledit profil d'extrémité (7) et les attaches (3) de la pale au moyeu du rotor, ledit profil d'extrémité (7) et ledit profil d'emplanture (8) délimitant, selon la majeure partie de l'envergure de la pale, une surface aérodynamique (9) engendrée par des profils de corde essentiellement constants et présentant notamment chacun, d'une part, un rayon de courbure maximale $R_o$ au bord d'attaque défini approximativement par l'expression $R_o = 1{,}7\,C \cdot e^2_{max}$, dans laquelle $C$ représente la corde et $e_{max}$ l'épaisseur relative maximale du profil considéré, d'autre part, un point de courbure minimale positionné à l'intrados à une distance du bord attaque (10) environ égale à 20% de la longueur de la corde (C) dudit profil considéré, lesdits profils de ladite surface aérodynamique (9) ayant par ailleurs à partir du profil d'extrémité (7) et vers le profil d'emplanture (8), un vrillage aérodynamique augmentant linéairement et sensiblement jusqu'à la section de pale où est défini ledit profil d'emplanture, ledit vrillage étant ensuite inversé, caractérisée en ce que l'angle de vrillage formé par la corde de portance nulle ($C_0$) d'un profil de ladite surface aérodynamique (9) et un plan de référence (P) passant par le milieu des attaches (3) de la pale (1) au moyeu du rotor est pour le profil d'extrémité (7) au plus égal à 0,3 degré et en ce que la différence entre l'angle de vrillage du profil d'emplanture (8) et l'angle de vrillage du profil d'extrémité (7) est au moins égale à 6° et au plus égale à 8°.

2. Pale selon la revendication 1, caractérisée en ce que l'épaisseur relative maximale du profil d'emplanture (8) est au moins égale à 9% et au plus égale à 13% de la longueur de la corde dudit profil d'emplanture, et en ce que ladite épaisseur relative maximale est conservée constante, vers le profil d'extrémité, sur une distance ($L_2$) au moins égale à 52% de la longueur de l'envergure de la pale.

3. Pale selon l'une des revendications 1 ou 2, caractérisée en ce que l'épaisseur relative maximale du profil d'extrémité est au moins égale à 6% et au plus égale à 9% de la longueur de la corde dudit profil d'extrémité.

4. Pale selon l'une quelconque des revendications 1 à 3, caractérisée en ce que sur une distance ($L_3$) au plus égale à 30% de la longueur de l'envergure de la pale, l'épaisseur relative maximale des profile de la surface aérodynamique croît linéairement depuis le profil d'extrémité (7), où l'épaisseur relative maximale est minimale, jusqu'à la section de la pale où l'épaisseur relative maximale devient constante et maximale.

5. Pale selon la revendication 1, caractérisée en ce que l'angle de vrillage formé par la corde de portance nulle ($C_0$) d'un profil de ladite surface aérodynamique (9) et un plan de référence (P) passant par le milieu des attaches (3) de la pale (1) au moyeu du rotor est pour le profil d'extrémité approximativement égal à 0,2 degré, ledit profil d'extrémité ayant de plus, d'une part une épaisseur relative maximale environ égale à 7% de la longueur de sa corde, d'autre part, une différence de vrillage par rapport au profil d'emplanture (7) environ égale à 7°, la distance ($L_1$) séparant ledit profil d'extrémité (7) dudit profil d'emplanture (8) étant par ailleurs environ égale à 80% de la longueur de l'envergure (L) de la pale, et en ce que l'épaisseur relative maximale du profil d'emplanture (8) est environ égale à 12% de la longueur de sa corde, ladite épaisseur relative étant conservél constante sur une distance ($L_2$) environ égale à 57% de la longueur de la pale pour décroître ensuite linéairement vers le profil d'extrémité.

6. Voilure tournante d'aéronef comportant au moins deuc pales, caractérisée en ce que chacune desdites pales est définie par des

profils aérodynamiques, présentant les évolutions d'angle de vrillage et d'épaisseur relative maximale telles que spécifiées sous l'une des revendications 1 à 4 ou sous la revendication 5.

**Patentansprüche**

1. Hochleistungsrotorblatt für Hubschrauber mit einem senkrecht zur Flügelvorderkante angeordneten Endprofil (7) und einem Flügelwurzelprofil (8) zwischen dem Endprofil (7) und den Rotorblattanschlüssen (3) an der Rotornabe, wobei das Endprofil (7) und das Flügelwurzelprofil gemäß dem größten Teil des Flügelspannweite eine aerodynamische Oberfläche (9) begrenzen, die von den im wesentlichen konstanten Flügeltiefenprofilen erzeugt werden, die insbesondere jeweils einerseits an der Flügelvorderkante einen annährend durch den Ausdruck $Ro = 1{,}7\ C \cdot e^2_{max}$ bestimmten maximalen Krümmungsradius, worin C die Flügeltiefe und $e_{max}$ die relative maximale Dicke des in Betracht kommenden Profils darstellt, und andererseits einen minimalen Krümmungspunkt biegen, der an der Flügelunterseite in einer etwa 20% der Länge der Flügeltiefe (C) des in Betracht gezogenen Profils entsprechenden Entfernung von der Flügelvorderkante liegt, und die Profile der aerodynamischen Oberfläche (9) darüber hinaus ausgehend vom Endprofil (7) und zum Flügelwurzelprofil hin eine aerodynamische Verwindung haben, die sich linear und allgemein bis zum das Flügelwurzelprofil bestimmenden Blattquerschnitt verstärkt und die sich dann umkehrt, dadurch gekennzeichnet, daß die von der Flügeltiefe mit Nullauftrieb ($C_0$) eines Profils der aerodynamischen Oberfläche (9) gebildete Verwindung und eine durch die Mitte der Rotorblattanschlüsse (1) an der Rotornabe gehenden Bezugsebene für das Endprofil (7) höchstens gleich 0,3 Grad ist und daß der Unterschied zwischen dem Verwindungswinkel des Flügelwurzelprofils (8) und dem Verwindungswinkel des Endprofils (7) mindestens gleich 6° und höchstens gleich 8° ist.

2. Hochleistungsrotorblatt nach Anspruch 1, dadurch gekennzeichnet, daß die relative Maximaldicke des Flügelwurzelprofils mindestens gleich 9% und höchstens gleich 13% der Flügeltiefenlänge des Flügelwurzelprofils ist, und dadurch, daß die relative Maximaldicke zum Endprofil hin auf einer Entfernung ($L_2$) konstant gehalten wird, die mindestens 52% der Länge der Flügelspannweite des Blatts entspricht.

3. Hochleistungsrotorblatt nach einem der Ansprüche 1 oder 2, dadurch gekennzeichnet, daß die relative Maximaldicke des Endprofils zumindest 6% und höchstens 9% der Länge der Flügeltiefe des Endprofils entspricht.

4. Hochleistungsrotorblatt nach einem der Ansprüche 1 bis 3, dadurch gekennzeichnet, daß über eine Entfernung ($L_3$) von höchstens gleich 30% der Länge der Flügelspannweite des Blattes die relative Maximaldicke der Profile der aerodynamischen Oberfläche ausgehend von dem Endprofil (7), wo die relative Maximaldicke minimal ist, bis zum Blattquerschnitt, wo die relative maximale Dicke konstant und maximal wird, linear zunimmt.

5. Hochleistungsrotorblatt nach Anspruch 1, dadurch gekennzeichnet, daß der Verwindungswinkel, der von der Flügeltiefe mit Nullauftrieb ($C_0$) eines Profils der aerodynamischen Oberfläche (9) gebildet wird, und die Bezugsebene (p), die durch die Anschlüsse (3) vom Blatt (1) an der Rotornabe gehen, für das Endprofil annährend gleich 0,2 Grad ist, wobei dieses Endprofil darüber hinaus einerseits eine relative Maximaldicke, die etwa 7% der Länge ihrer Flügeltiefe entspricht, und andererseits eine Verwindungsdifferenz gegenüber dem Flügelwurzelprofil (8) von etwa gleich 7° aufweist und die Entfernung ($L_1$), die das Endprofil (7) vom Flügelwurzelprofil (8) trennt, etwa 80% der Länge der Spannbreite (L) des Blattes entspricht, und daß die relative Maximaldicke des Flügelwurzelprofils (8) etwa 12% der Länge der Flügeltiefe entspricht, wobei die relative Dicke auf einer Entfernung von gleich 57% der Länge des Blattes konstant gehalten wird, um hiernach zum Endprofil hin linear abzunehmen.

6. Hubschraube eines Luftfahrzeuges mit mindestens zwei Luftschraubenblätter, dadurch gekennzeichnet, daß jedes der Blätter durch die aerodynamischen Profile bestimmt ist, die Entwicklungen der Winkelverbindung und der relativen Maximaldicke nach den Ansprüchen 1 bis 4 oder dem Anspruch 5 gemachten Angaben darstellen.

**Claims**

1. A high performance blade for helicopter rotor, comprising an end profile (7) disposed perpendicularly to the leading edge of the blade and a root profile (8) placed between said end profile (7) and the fastenings (3) of the blade to the hub of the rotor, said end profile (7) and said root profile (8) defining along the major part of the span of the blade an aerodynamic surface (9) produced by profiles of substantially constant chord and each presenting, on the one hand, a radius of maximum curvature Ro at the leading edge defined approximately by the expression $Ro = 1.7\ C \cdot e^2_{max}$, in which C represents the cord and $e_{max}$ the maximum relative thickness of the profile in question, on the other hand, a point of minimum curvature positioned on the lower surface at a distance form the leading edge (10) approximately equal at a distance form the leading edge (10) approximately equal to 20% of the legnth of the cord C of said profile, said profile of said aerodynamics surface (9) furthermore having, from the end profile (7) and towards the root profile (8), an aerodynamic twist increasing linearly and substantially up to the section of blade where said root profile is defined, said twist then being reversed, charac-

terized in that the angle of twist formed by the zero lift chord Co of a profile of said aerodynamic surface (9) and a plane of reference P passing through the centre of the fastenings (3) of the blade (1) to the hub of the rotor ist, for the end profile (7), at the most equal to 0.3 degrees and in that the differenzce between the angle of twist of the root profile (8) and the angle of twist of the end profile (7) is at least equal to 6° and at the most equal to 8°.

2. The blade of Claim 1, characterized in that the maximum relative thickness of the root profile (8) is at least equal to 9% and at the most equal to 13% of the length of the chord of said root profile and in that said maximum relative thickness is maintained constant, towards the end profile, over a distance L2 at least equal to 52% of the length of the span of the blade.

3. The blade of either one of Claims 1 or 2, characterized in that the maximum relative thickness of the end profile is at least equal to 6% and at the most equal to 9% of the length of the chord of the end profile.

4. The blade of any one of Claims 1 to 3, characterized in that over a distance L3 at the most equal to 30% of the length of the span of the blade, the maximum relative thickness of the profiles of the aerodynamic surface increases linearly from said end profile (7), where the maximum relative thickness is minimum, up to the section of blade where the maximum relative thickness becomes constant and maximum.

5. The blade of Claim 1, characterized in that the angle of twist formed by the zero lift chord Co of a profile of said aerodynamic surface (9) and a plane of reference P passing through the centre of the fastenings (3) of the blade (1) to the hub of the rotor is, for the end profile, approximately equal to 0.2 degrees, said end profile having, in addition, on the hand, a maximum relative thickness equal to about 7% of the length of its chord, on the other hand, a difference of twist with respect to the root profile (7) equal to about 7°, the distance L1 separating said end profile (7) from said root profile (8) being approximately equal to 80% of the length of the span L of the blade, and in that the maximum relative thickness of the root profile (8) is approximately equal to 12% of the length of its chord, said relative thickness being maintained constant over a distance L2 approximately equal to 57% of the length of the blade, decreasing thereafter linearly towards the end profile.

6. Rotary wings for aircraft comprising at least two blades, characterized in that each of said blades is defined by aerodynamic profiles, presenting evolution of angle of twist and of maximum relative thickness as defined in one of Claims 1 to 4 or in Claim 5.

Fig.1

Fig.2

0 036 825

Fig.3

Fig.4

Fig.5

Fig.6